# EUROPEAN PATENT APPLICATION

(11) **EP 4 287 294 A1**
(43) Date of publication of application: **06.12.2023**
(21) Application number: 22745759.5
(22) Date of filing: 21.01.2022
(51) Int. Cl.: H01M 4/13, H01M 10/052

(54) **LITHIUM SECONDARY BATTERY**

(30) Priority: 29.01.2021 JP 2021013765
(71) Applicant: Panasonic Intellectual Property Management Co., Ltd., Osaka 571-0057 (JP)
(72) Inventor: MIYAMAE Ryohei, Kadoma-shi, Osaka 571-0057 (JP); KANO Akira, Kadoma-shi, Osaka 571-0057 (JP); ISHII Kiyohiro, Kadoma-shi, Osaka 571-0057 (JP)
(74) Representative: Novagraaf International SA
(86) International application number: PCT/JP2022/002255
(87) International publication number: WO 2022/163538

(57) **Abstract**

A lithium secondary battery includes a positive electrode that absorbs lithium ions during discharge and releases the lithium ions during charge, a negative electrode at which a lithium metal deposits during charge and from which the lithium metal dissolves during discharge, and a non-aqueous electrolyte having lithium ion conductivity. The surface of the negative electrode is covered with a protective layer. The protective layer includes a block polymer in which a first polymer segment having a repeating structure of a monomer unit A and a second polymer segment having a repeating structure of a monomer unit B are bound together.

## Description

### [Technical Field]

The present disclosure relates to a lithium secondary battery.

### [Background Art]

Lithium ion batteries are known as non-aqueous electrolyte secondary batteries with high capacity. A higher capacity of a lithium ion battery can be achieved by, for example, using graphite and an alloy active material, such as a silicon compound, in combination as a negative electrode active material. However, a higher capacity of a lithium ion battery is reaching the limit for improvement.

As non-aqueous electrolyte secondary batteries superior in capacity to lithium ion batteries, lithium secondary batteries (lithium metal secondary batteries) are seen as promising. In a lithium secondary battery, a lithium metal deposits at the negative electrode during charge, and the deposited lithium metal dissolves during discharge and is released as lithium ions into the non-aqueous electrolyte. The lithium metal tends to deposit in the form of dendrites during charge, leading to a large amount of expansion of the negative electrode during charge.

Patent Literature 1 proposes using a lithium electrode including: an electrode composite including a porous metal current collector, and lithium metal inserted into the pores in the metal current collector; and a lithium-ion conductive protective film formed by coating on at least one surface of the electrode composite, thereby to prevent the growth of lithium dendrites. Examples of the lithium-ion conductive protective film mentioned in the literature include polyethylene oxide (PEO), polymethyl methacrylate (PMMA), and polyvinylidene fluoride (PVdF).

### [Citation List]

### [Patent Literature]

Patent Literature 1: Japanese Laid-Open Patent Publication No. 2016-527679

### [Summary of Invention]

### [Technical Problem]

However, polyethylene oxide (PEO), polymethyl methacrylate (PMMA), and the like used as the lithium-ion conductive protective film are apt to dissolve in liquid electrolyte, and with increase in the number of cycles, the function as a protective film may deteriorate in some cases. Moreover, with polyvinylidene fluoride (PVdF), sufficient strength cannot be obtained in some cases, failing to fully exert its effect as a protective layer. Therefore, even with the method disclosed in Patent Literature 1, the deposition form of lithium metal is still difficult to control, and the suppression of dendrite formation is insufficient.

When the strength of the protective film is low, dendrites of lithium metal may penetrate the protective film, and the dendrites having penetrated the protective film come in contact with the non-aqueous electrolyte, by which side reactions are caused, leading to the deterioration in cycle characteristics, in some cases.

### [Solution to Problem]

One aspect of the present disclosure relates to a lithium secondary battery, including: a positive electrode that absorbs lithium ions during discharge and releases the lithium ions during charge; a negative electrode at which a lithium metal deposits during charge and from which the lithium metal dissolves during discharge; and a non-aqueous electrolyte having lithium ion conductivity, wherein a surface of the negative electrode is covered with a protective layer, and the protective layer includes a block polymer in which a first polymer segment having a repeating structure of a monomer unit A and a second polymer segment having a repeating structure of a monomer unit B are bound together.

### [Advantageous Effects of Invention]

According to the present disclosure, the deterioration in cycle characteristics of a lithium secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal cross-sectional view of a lithium secondary battery according to an embodiment of the present disclosure.
[FIG. 2] An enlarged view of an essential part of an example of an electrode group in FIG. 1.
[FIG. 3] An enlarged view of an essential part of another example of the electrode group in FIG. 1.

### [Description of Embodiments]

A lithium secondary battery according to the present disclosure includes: a positive electrode that absorbs lithium ions during discharge and releases lithium ions during charge; a negative electrode at which a lithium metal deposits during charge and from which the lithium metal dissolves during discharge; and a non-aqueous electrolyte having lithium ion conductivity. The surface of the negative electrode is covered with a protective layer. The protective layer includes a block polymer in which a first polymer segment having a repeating structure of a monomer unit A and a second polymer segment having a repeating structure of a monomer unit B are bound together.

Here, "monomer unit A (B)" refers to a unit that a polymerized monomer A (B) forms in a polymer. For example, given a monomer A (B) having a vinyl group (-CH=CH₂), when the vinyl group is polymerized, the monomer unit A (B) has an ethane-1,1,2-triyl group (>CH-CH₂-).

The negative electrode surface is covered with a protective layer. That is, the lithium metal deposited at the negative electrode is covered with the protective layer, which suppresses the contact between the lithium metal and the non-aqueous electrolyte. The protective layer inhibits the growth of dendrites of lithium metal. Therefore, the occurrence of side reactions due to contact between the lithium metal and the non-aqueous electrolyte is sufficiently suppressed, and the deterioration in cycle characteristics due to the above side reactions is suppressed.

When a block polymer is used for the protective layer, the function of the first polymer segment and the function of the second polymer segment can be both exerted. Furthermore, the respective shortcomings of the first polymer segment and the second polymer segment are reduced, as compared with when the first polymer and the second polymer are mixed and contained in the protective layer. This is a remarkable effect that cannot be obtained by simply copolymerizing a monomer A and a monomer B.

A polymer for forming a protective layer is desired to have high lithium-ion conductivity. However, a polymer with high lithium-ion conductivity also has a high affinity with liquid electrolyte, and is apt to dissolve in liquid electrolyte. Moreover, a high film strength cannot be obtained, which may cause penetration of the dendrites of lithium metal into the protective layer, or a break of the protective layer due to the tension associated with the expansion and contraction of the wound body during charge and discharge. As a result, with increase in the number of cycles, the film stability of the protective layer decreases, and the growth of dendrites fails to be suppressed, which causes a deterioration in cycle characteristics. According to the lithium secondary battery according to an embodiment of the present disclosure, for example, a protective film is formed using a block polymer including the second polymer segment having high lithium-ion conductivity in which both ends of the second polymer segment is terminated with the first polymer segment having high mechanical strength, thereby the mechanical strength of the protective layer can be increased by the first polymer segment, while high lithium-ion conductivity is obtained by the second polymer segment. Thus, a protective layer having high film stability and high lithium-ion conductivity can be obtained, and a lithium ion battery having excellent cycle characteristics can be realized. The block polymer may be, for example, an ABA-type triblock copolymer in which the first polymer segment is bound to each of the both ends of the second polymer segment.

Block polymers may aggregate with each other, forming a secondary structure. At this time, the secondary structure can be formed such that segments having the same monomer unit within a block polymer are arranged close to each other. That is, the secondary structure of block polymers can be formed such that the first polymer segments in the individual block polymer assemble with each other, while the second polymer segments in the individual block polymer assemble with each other. For example, it is considered possible to control the secondary structure of block polymers such that the surface of the protective layer is covered with the first polymer segments with high film strength, and inside the protective layer, the second polymer segments with high lithium-ion conductivity are arranged. With an ABA-type triblock copolymer, for example, by controlling the monomer units or degree of polymerization (molecular weight) in the first and second polymer segments, the secondary structure of block polymers can be easily controlled.

For the first polymer segment, for example, a polymer with high tensile strength and excellent in mechanical strength can be used. The tensile strength of the first polymer segment may be higher than that of the second polymer segment. In this case, even when a polymer with low mechanical strength and/or a polymer which is apt to dissolve in the electrolyte is used for the second polymer segment, by using such a polymer as a block polymer combined with the first polymer segment, the mechanical strength can be increased, and the film stability of the protective layer can be maintained high.

For the second polymer segment, for example, a polymer having a higher degree of swelling with the non-aqueous electrolyte than that of the first polymer segment can be used. By using the second polymer segment having high degree of swelling, excellent lithium-ion conductivity can be obtained in the protective layer. However, the higher the degree of swelling is, the more likely the film strength of the protective layer tends to decrease. By forming into a block polymer combined with the first polymer, the film strength of the protective layer can be maintained at a high value, and excellent film stability can be maintained. Moreover, even when the degree of swelling of the second polymer segment is so high that it alone will dissolve in the non-aqueous electrolyte, by forming into a block polymer combined with the first polymer segment, it can be used as a protective layer.

The tensile strength and the degree of swelling of the first and second polymer segments are determined by disassembling a lithium secondary battery, and analyzing the protective layer taken out therefrom for the structure of the block polymer. By analyzing the structure of the block polymer, the structures of the first and second polymer segments contained in the block polymer (type, molecular weight, etc. of the monomer units A and B (i.e., monomers A and B)) can be identified. If necessary, a first polymer that is a homopolymer of the identified monomer A and a second polymer that is a homopolymer of the identified monomer B may be synthesized separately, for each of which the tensile strength and the degree of swelling are determined.

The tensile strength may be determined according to JIS K 7161 by forming a sample of a predetermined shape, or may be determined from a known database.

The degree of swelling is determined by analyzing the non-aqueous electrolyte in the disassembled lithium secondary battery for its components, to prepare a non-aqueous electrolyte similar to the components obtained by the analysis, and in a 40 °C environment, immersing the first polymer and the second polymer in the non-aqueous electrolyte. The degree of swelling is determined as a percentage of increase in polymer weight after the immersion.

Whether the polymer is a block polymer or not, and, when it is a block polymer, its structure (e.g., whether it is a triblock copolymer, or a random copolymer, or a mixture of a first polymer and a second polymer) can be measured by an end-group determination method using GPC (gel permeation chromatography)-NMR.

The first polymer segment includes, for example, at least one selected from the group consisting of polyimide (PI), polyamide imide (PAI), and polystyrene (PS). Among them, polystyrene (PS) is preferred because it is stable against non-aqueous electrolyte, has sufficient mechanical strength, and is inexpensive. That is, styrene is preferably used as the monomer A constituting the monomer unit A. The monomer unit A may account for 90 mol% or more of the monomer units constituting the first polymer segment. The monomer unit B constituting the second polymer segment, if accounting for, for example, 10 mol% or less, may be contained in the first polymer segment.

The second polymer segment includes, for example, at least one selected from the group consisting of a fluorine-containing polymer, polyacrylate, polyvinyl alcohol, polyacrylic acid, polymethacrylic acid, and polyethylene oxide (PEO). The fluorine-containing polymer may be at least one selected from the group consisting of polyvinylidene fluoride (PVdF), polytetrafluoroethylene (PTFE), a copolymer of vinylidene fluoride (VdF) and hexafluoropropylene (HFP), and a copolymer of VdF and tetrafluoroethylene (TFE). The acrylate may be polymethyl methacrylate (PMMA). Preferred among them is polymethyl methacrylate (PMMA). That is, methyl methacrylate is preferably used as the monomer B constituting the monomer unit B. The monomer unit B may account for 90 mol% or more of the monomer units constituting the second polymer segment. The monomer unit A constituting the first polymer segment, if accounting for, for example, 10 mol% or less, may be contained in the second polymer segment.

The molecular weights of the first polymer segment and the second polymer segment are not particularly limited, but it is preferable that the molecular weight of the first polymer segment is smaller than that of the second polymer segment, in order to ease, in the later-described protective layer formation step, the preparation of an ink for forming a protective layer in which the block polymer is dissolved in a liquid component. Here, the molecular weights of the first polymer segment and the second polymer segment each refer to a number average molecular weight.

The first polymer segment may have a molecular weight (number average molecular weight) of, for example, 1,000 or more and 100,000 or less. The second polymer segment may have a molecular weight (number average molecular weight) of, for example, 10,000 or more and 1,000,000 or less. When the number average molecular weight is within the above range, a protective layer having favorable flexibility can be easily obtained. When winding the negative electrode in the battery fabrication process, the protective layer can readily follow the negative electrode, and the coverage of the negative electrode surface with the protective layer is likely to be maintained.

In view of suppressing the contact between the lithium metal and the non-aqueous electrolyte and suppressing the penetration of dendrites into the protective layer, the thickness of the protective layer may be 0.1 µm or more and 5 µm or less, or 0.5 µm or more and 2 µm or less. The thickness of the protective layer can be determined by obtaining a cross-sectional image of the protective layer at the surface of the negative electrode with a scanning electron microscope (SEM), measuring the thickness of the protective layer at any 10 points using the cross-sectional image, and averaging the measured values.

The protective layer contains the above block polymer. A material other than the above block polymer may be contained in the protective layer. The material other than the block polymer includes, for example, a resin material and inorganic particles. Examples of the resin material include, in addition to the materials already mentioned as examples of the first polymer segment and the second polymer segment, a polyolefin resin, a silicone resin, and an epoxy resins. These resin materials may be used singly, or in combination of two or more kinds.

The inorganic particles are particles including an inorganic material (e.g., metal oxide, metal hydroxide, metal composite oxide, metal nitride, metal carbide, metal fluoride, etc.). When the block polymer (and the resin material) and the inorganic particles are mixed together in the protective layer, favorable lithium-ion conductivity can be easily obtained in the protective layer, and through the protective layer, lithium ions can migrate smoothly between the negative electrode and the non-aqueous electrolyte during charge and discharge. In order to increase the strength of the protective layer, the inorganic particles may have a density of 6 g/cm³ or more.

The density of the inorganic particles may be 3.5 times or more as high as the density in the region not occupied by the inorganic particles (i.e., the region occupied by the block polymer or the resin material) within the protective layer. In this case, in forming a protective layer, the inorganic particles can deposit thinly and densely, forming a film with a uniform thickness. Therefore, uneven distribution of the inorganic particles due to their aggregation in the plane direction of the protective layer is suppressed, variation in strength in the plane direction of the protective layer is suppressed, and the reliability on the strength of the protective layer is enhanced.

Specific examples of the inorganic material constituting the inorganic particles include copper oxide, bismuth oxide, tungsten oxide, indium oxide, and silver oxide. The inorganic particles (inorganic material) may be used singly or in combination of two or more kinds. In particular, the inorganic particles preferably contain at least one selected from the group consisting of copper oxide particles and bismuth oxide particles. In this case, it is easy to increase the density of the inorganic particles to 6 g/cm³ or more, and to adjust the ratio of the density of the inorganic particles to that of the resin material to 3.5 or more. It is easy to uniformly disperse the inorganic particles in the plane direction of the protective layer. That is, a protective layer with high strength can be easily obtained, and the reliability on the strength of the protective layer can be easily enhanced. Furthermore, it is easy to obtain a protective layer having favorable lithium-ion conductivity.

When the protective layer contains a resin material other than the block polymer, the ratio by mass of the block polymer to the total of the block polymer and the resin material may be 80% or more, may be 90% or more, and may be 95% or more.

When the protective layer contains inorganic particles, the mass ratio of the inorganic particles in the protective layer may be 50 mass% or less, may be 35 mass% or less, and may be 5 mass% or more and 20 mass% or less. When the mass ratio of the inorganic particles in the protective layer is within the above range, the flexibility, the strength, and the lithium ion conductivity can be sufficiently ensured in the protective layer.

The protective layer can be formed by, for example, applying an ink for forming a protective layer onto a surface of a negative electrode current collector, followed by drying. The application can be performed using, for example, a bar coater, an applicator, a gravure coater, and the like. The ink for forming a protective layer can be prepared by, for example, adding and mixing a block polymer, a liquid component, and optionally, other resin material and inorganic particles. As the liquid component, a component capable of dispersing inorganic particles and dissolving a resin material can be used, examples of which include N-methyl-2-pyrrolidone (NMP), dimethyl ether (DME), and tetrahydrofuran (THF).

The negative electrode and the positive electrode preferably has a space therebetween in which a lithium metal deposits. The space can be formed by providing a spacer between the negative electrode and the positive electrode. In view of improving the productivity and the like, the same material as that used for the protective layer may be used for the spacer. When forming a protective layer, the thickness of the protective layer may be partially increased, so that the thick portion can be used as a spacer. That is, the spacer may be arranged integrally with the protective layer. For example, after an ink for forming a protective layer is applied onto a surface of a negative electrode current collector using a coater (e.g., gravure coater), to form a protective layer, the same ink as above for forming a protective layer may be applied linearly on the protective layer using a dispenser, to form a line-shaped protrusion (spacer). In view of improving the productivity and the like, the drying of the protective layer and the protrusion may be performed at the same time, after the protrusion is formed.

In the following, each component of the lithium secondary battery will be more specifically described.

### [Negative electrode]

The negative electrode includes a negative electrode current collector. In a lithium secondary battery, a lithium metal deposits on a surface of the negative electrode during charge. Specifically, lithium ions contained in the non-aqueous electrolyte receive electrons on the negative electrode during charge and become lithium metal, which deposits on the surface of the negative electrode. The lithium metal deposited on the surface of the negative electrode dissolves in the form of lithium ions during discharge in the non-aqueous electrolyte. The lithium ions contained in the non-aqueous electrolyte may be either derived from a lithium salt added to the non-aqueous electrolyte or supplied from the positive electrode active material during charge, or both. The protective layer is, when lithium metal is not deposited on the surface of the negative electrode current collector, covering the surface of the negative electrode current collector, and when lithium metal is deposited on the surface of the negative electrode current collector, covering the lithium metal.

The negative electrode may include a lithium ion storage layer (a layer that develops capacity by absorbing and releasing lithium ions into and from the negative electrode active material such as graphite) supported on the negative electrode current collector. In this case, the open circuit potential of the negative electrode at full charge may be 70 mV or less versus lithium metal (lithium dissolution/deposition potential). When the open circuit potential of the negative electrode at full charge is 70 mV or less versus lithium metal, lithium metal is present on the surface of the lithium ion storage layer at full charge. That is, the negative electrode develops capacity through deposition and dissolution of lithium metal. The protective layer is, when lithium metal is not deposited on the surface of the lithium storage layer, covering the surface of the negative electrode current collector, and when lithium metal is deposited on the surface of the lithium ion storage layer, covering the lithium metal.

Here, "at full charge" means a state in which the battery is charged to, for example, a charged state of 0.98 × C or more, where C is the rated capacity of the battery. The opencircuit potential of the negative electrode at full charge can be measured by disassembling a fully charged battery in an argon atmosphere, to take out the negative electrode, and assembling a cell using lithium metal as a counter electrode. The non-aqueous electrolyte of the cell may be of the same composition as that in the disassembled battery.

The lithium ion storage layer is a layer of a negative electrode mixture containing a negative electrode active material. The negative electrode mixture may contain, in addition to the negative electrode active material, a binder, a thickener, a conductive agent, and others.

Examples of the negative electrode active material include a carbonaceous material, a Si-containing material, and a Sn-containing material. The negative electrode may include one kind of negative electrode active material or two or more kinds of negative electrode active materials in combination. The carbonaceous material may be, for example, graphite, graphitizable carbon (soft carbon), non-graphitizable carbon (hard carbon), and the like.

The conductive material is, for example, a carbon material. Examples of the carbon material include carbon black, acetylene black, Ketjen black, carbon nanotubes, and graphite.

The binder may be, for example, a fluorocarbon resin, a polyacrylonitrile, a polyimide resin, an acrylic resin, a polyolefin resin, a rubbery polymer, and the like. Examples of the fluorocarbon resin include polytetrafluoroethylene and polyvinylidene fluoride.

The negative electrode current collector is an electrically conductive sheet. As the conductive sheet, foil, film, and the like can be used.

The negative electrode current collector (conductive sheet) may be made of any conductive material other than lithium metal and lithium alloys. The conductive material may be a metal material, such as a metal and an alloy. The conductive material is preferably a material that does not react with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, or graphite having a basal plane predominately exposed on its surface. Examples of the alloy include a copper alloy and stainless steel (SUS). In particular, copper and/or a copper alloy that have high electrical conductivity are preferred.

The thickness of the negative electrode current collector is, for example, 5 µm or more and 300 µm or less, but is not limited thereto.

### [Positive electrode]

The positive electrode includes, for example, a positive electrode current collector and a positive electrode mixture layer supported on the positive electrode current collector. The positive electrode mixture layer contains, for example, a positive electrode active material, a conductive agent, and a binder. The positive electrode mixture layer may be formed only on one surface or on both surfaces of the positive electrode current collector. The positive electrode is obtained by, for example, applying a positive electrode mixture slurry containing a positive electrode active material, a conductive agent, and a binder on both surfaces of a positive electrode current collector, drying the applied film, and then rolling.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred in terms of its inexpensive production cost and high average discharge voltage.

The lithium contained in the lithium-containing transition metal oxide is released from the positive electrode during charge in the form of lithium ions, and deposits in the form of lithium metal on the negative electrode or the negative electrode current collector. During discharge, the lithium metal dissolves from the negative electrode to release lithium ions, which are absorbed into the composite oxide in the positive electrode. That is, lithium ions involved in charge and discharge are mostly derived from the solute in the non-aqueous electrolyte and from the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Co, Ni, and/or Mn. The lithium-containing transition metal oxide can contain one or more kinds of typical metal elements, as needed. Examples of the typical metal element include Mg, Al, Ca, Zn, Ga, Ge, Sn, Sb, Pb, and Bi. The typical metal element may be Al, and the like.

Among the lithium-containing transition metal oxides, a composite oxide containing Co, Ni and/or Mn as transition metal elements and optionally containing Al, and having a layered rock-salt type crystal structure is preferred for achieving a high capacity.
In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder and the conductive agent, for example, those exemplified for the negative electrode can be used. The shape and the thickness of the positive electrode current collector can be selected respectively from the shape and the range of the positive electrode current collector.

The positive electrode current collector (conductive sheet) may be made of, for example, a metal material containing Al, Ti, Fe, and the like. The metal material may be Al, an Al alloy, Ti, a Ti alloy, a Fe alloy, and the like. The Fe alloy may be stainless steel (SUS).

The thickness of the positive electrode current collector is not particularly limited, and is, for example, 5 µm or more and 300 µm or less.

### [Separator]

The separator is a porous sheet having ion permeability and electrically insulating properties. The porous sheet includes, for example, a thin film having fine pores, a woven fabric, a non-woven fabric, and the like. The separator may be made of a polymer material, but is not limited thereto. The polymer material is exemplified by an olefin resin, a polyamide resin, and cellulose. Examples of the olefin resin include polyethylene, polypropylene, and a copolymer of ethylene and propylene. The separator may contain an additive, as needed. Examples of the additive include an inorganic filler.

The thickness of the separator is not particularly limited, and is, for example, 5 µm or more and 20 µm or less, and more preferably 10 µm or more and 20 µm or less.

### [Non-aqueous electrolyte]

The non-aqueous electrolyte having lithium ion conductivity contains, for example, a non-aqueous solvent, and lithium ions and anions dissolved in the non-aqueous solvent. The non-aqueous electrolyte may be liquid, and may be gel.

The liquid non-aqueous electrolyte can be prepared by dissolving a lithium salt in a non-aqueous solvent. When the lithium salt is dissolved in the non-aqueous solvent, lithium ions and anions are produced.

The gel non-aqueous electrolyte contains a lithium salt and a matrix polymer, or includes a lithium salt, a non-aqueous solvent, and a matrix polymer. As the matrix polymer, for example, a polymer material that is gelled by absorbing the non-aqueous solvent is used. Examples of the polymer material include a fluorocarbon resin, an acrylic resin, and a polyether resin.

The lithium salt or anion may be any known one that is utilized for a non-aqueous electrolyte in a lithium secondary battery. Specific examples thereof include BF₄⁻, ClO₄⁻, PF₆⁻, CF₃SO₃⁻, CF₃CO₂⁻, anions of imides, and an anion of an oxalate complex anion. Examples of the anions of imides include N(SO₂CF₃)₂⁻, and N(CₘF₂ₘ₊₁SO₂)ₓ(CₙF₂ₙ₊₁SO₂)_{y}⁻, where m and n are independently 0 or an integer of 1 or more, x and y are independently 0, 1 or 2, and x + y = 2. The anion of an oxalate complex may contain boron and/or phosphorus. Examples of the anion of an oxalate complex include bis(oxalate)borate anion, difluoro(oxalate)borate anion: BF₂(C₂O₄)⁻, PF₄(C₂O₄)⁻, and PF₂(C₂O₄)₂⁻. The non-aqueous electrolyte may include one of these anions, or two or more kinds thereof.

In view of suppressing the deposition of lithium metal in a dendritic form, the non-aqueous electrolyte preferably includes at least an anion of an oxalate complex, and in particular, desirably includes an oxalate complex anion having fluorine, such as BF₂(C₂O₄)⁻. The oxalate complex anion having fluorine interacts with lithium, making it more likely for lithium metal to deposit uniformly in the form of fine particles. Therefore, local deposition of lithium metal can be easily suppressed. By controlling the deposition form of lithium metal to some extent using an anion of an oxalate complex, the function of the protective layer to suppress the contact between the lithium metal and the non-aqueous electrolyte can be exhibited more effectively. The oxalate complex anion having fluorine may be combined with another anion. The other anion may be, for example, PF₆⁻ and/or anions of imides.

Examples of the non-aqueous solvent include an ester, an ether, a nitrile, an amide, and halogen substituted derivatives of these. The non-aqueous electrolyte may contain these non-aqueous solvent singly, or in combination of two or more kinds. Examples of the halogen substituted derivative include a fluoride.

The ester includes, for example, a carbonic acid ester, a carboxylic acid ester, and the like. Examples of the cyclic carbonic acid ester include ethylene carbonate, propylene carbonate, and fluoroethylene carbonate (FEC). Examples of the chain carbonic acid ester include dimethyl carbonate (DMC), ethyl methyl carbonate (EMC), and diethyl carbonate. Examples of the cyclic carboxylic acid ester include γ-butyrolactone and γ-valerolactone. Examples of the chain carboxylic acid ester include ethyl acetate, methyl propionate, and methyl fluoropropionate.

The ether includes a cyclic ether and a chain ether. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be set to 0.5 mol/L or more and 3.5 mol/L or less. The concentration of the anion of an oxalate complex in the non-aqueous electrolyte may be set to 0.05 mol/L or more and 1 mol/L or less.

The non-aqueous electrolyte may contain an additive. The additive may form a surface film on the negative electrode. When the surface film derived from the additive is formed on the negative electrode, the dendrite formation and growth tend to be suppressed. Examples of the additive include vinylene carbonate, FEC, and vinyl ethyl carbonate (VEC).

### [Lithium secondary battery]

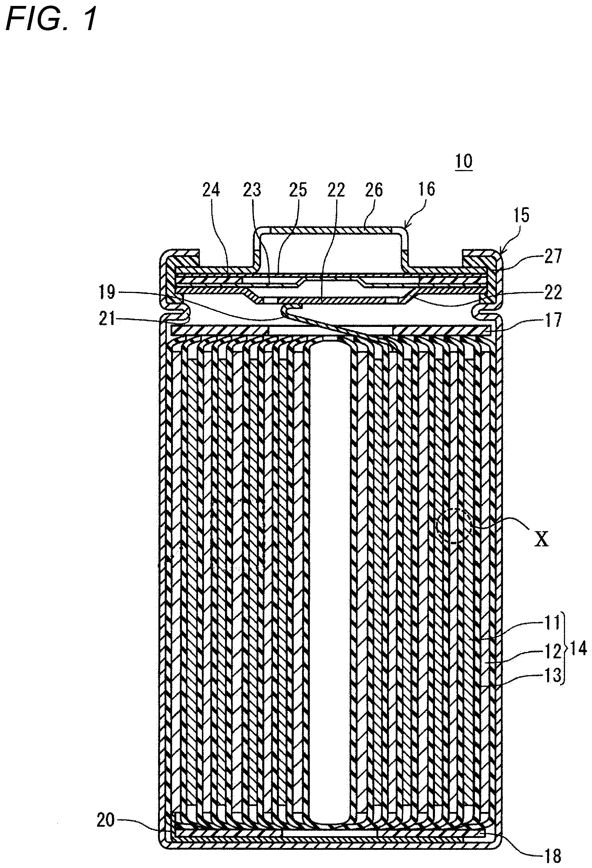

In the following, a configuration of a lithium secondary battery according to the present disclosure will be described with reference to the drawings, with a cylindrical battery having a wound electrode group taken as an example. FIG. 1 is a longitudinal cross-sectional view of a lithium secondary battery 10 which is an example of the present embodiment.

The lithium secondary battery 10 is a cylindrical battery including a cylindrical battery case, a wound electrode group 14 housed in the battery case, and a non-aqueous electrolyte (not shown). The battery case is constituted of a case main body 15 which is a bottomed cylindrical metal container, and a sealing body 16 sealing an opening of the case main body 15. The case main body 15 has an annular step portion 21 formed by partially pressing the sidewall of the case main body from outside in the vicinity of the opening. The sealing body 16 is supported by the opening side surface of the step portion 21. Between the case main body 15 and the sealing body 16, a gasket 27 is disposed, by which the hermeticity of the battery case is secured. Within the case main body 15, electrically insulating plates 17 and 18 are disposed respectively at both ends of the electrode group 14 in the winding axis direction.

The sealing body 16 includes a filter 22, a lower valve body 23, an electrically insulating member 24, an upper valve body 25, and a cap 26. The cap 26 is disposed outside the case main body 15, and the filter 22 is disposed inside the case main body 15. The lower valve body 23 and the upper valve body 25 are connected to each other at their respective center portions, and are interposed by the insulating member 24 at their respective peripheral portions. The filter 22 and the lower valve body 23 are connected to each other at their respective peripheral portions. The upper valve body 25 and the cap 26 are connected to each other at their respective peripheral portions. The lower valve body 23 is provided with an air vent hole. When the internal pressure of the battery case rises due to abnormal heat generation or other events, the upper valve body 25 bulges toward the cap 26 and spaced away from the lower valve body 23, which breaks the electrical connection between the lower valve body 23 and the upper valve body 25. When the internal-pressure further rises, the upper valve body 25 raptures, to let the gas escape though an aperture provided in the cap 26.

The electrode group 14 is constituted of a positive electrode 11, a negative electrode (negative electrode current collector) 12, and a separator 13. The positive electrode 11, the negative electrode 12, and the separator 13 interposed therebetween are all belt-like shaped, and are wound spirally together such that their respective width directions are in parallel with the winding axis direction. Insulating plates 17 and 18 are disposed at both ends in the axial direction of the electrode group 14, respectively.

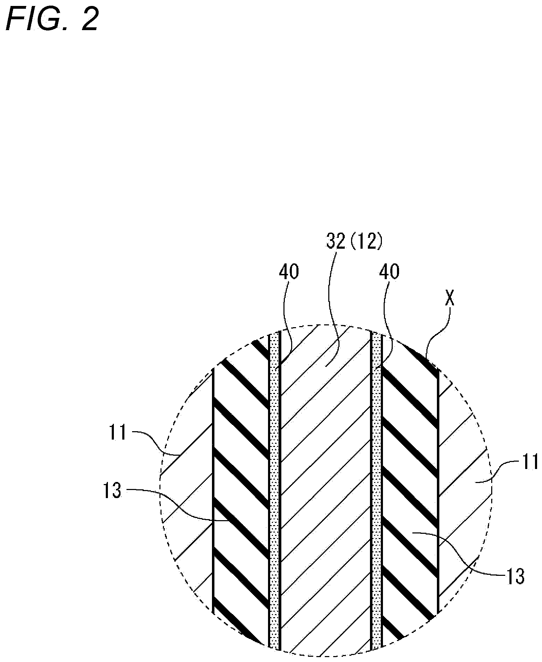

Here, FIG. 2 is an enlarged view of an essential part of an example of an electrode group in FIG. 1. FIG. 2 is a schematic enlarged view of a region X surrounded by the broken line in FIG. 1, in which no lithium metal is deposited on the surface of the negative electrode current collector.

As illustrated in FIG. 2, the positive electrode 11 includes a positive electrode current collector and a positive electrode mixture layer. The positive electrode 11 is electrically connected via a positive electrode lead 19 to a cap 26 that also serves as a positive electrode terminal. One end of the positive electrode lead 19 is connected to, for example, the positive electrode 11 at around its center in the longitudinal direction (the exposed portion of the positive electrode current collector). The other end of the positive electrode lead 19 extended from the positive electrode 11 is passed through a through-hole provided in the insulating plate 17 and welded to the inner side surface of the filter 22.

The negative electrode 12 includes a negative electrode current collector 32, and the surface of the negative electrode current collector 32 is covered with a protective layer 40. The protective layer 40 contains the above-described block polymer. The negative electrode 12 is electrically connected via a negative electrode lead 20 to the case main body 15 that also serves as a negative electrode terminal. One end of the negative electrode lead 20 is connected, for example, to the negative electrode 12 at its end in the longitudinal direction (the exposed portion of the negative electrode current collector 32), and the other end is welded to the inner bottom surface of the case main body 15. During charge, a lithium metal deposits on the surface of the negative electrode current collector 32, and the surface of the lithium metal is covered with the protective layer 40.

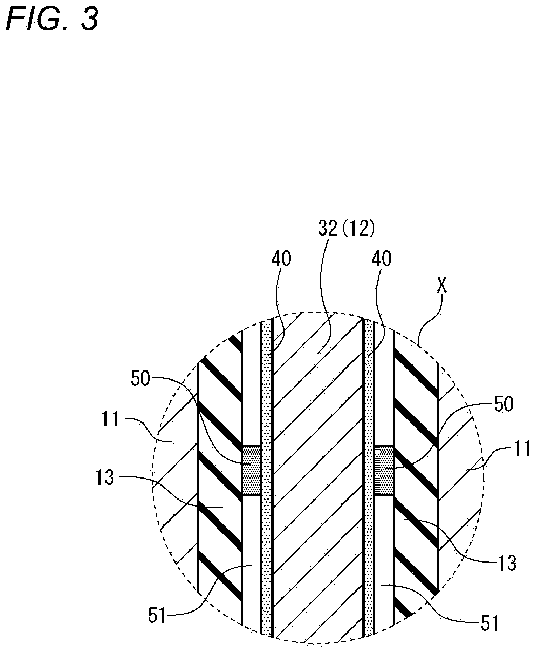

Here, FIG. 3 is an enlarged view of an essential part of another example of the electrode group in FIG. 1. FIG. 3 is a schematic enlarged view of the region X surrounded by the broken line in FIG. 1, in which no lithium metal is deposited on the surface of the negative electrode current collector. The same components as those in FIG. 2 are denoted by the same reference numerals, and descriptions thereof are omitted.

As illustrated in FIG. 3, a spacer 50 is provided between the negative electrode 12 having the protective layer 40 on its surface and a separator 13. The spacer 50 is formed of a line-shaped protrusion provided along the longitudinal direction of the separator 13. The height of the spacer 50 (line-shaped protrusion) based on the protective layer 40 is, for example, 10 µm or more and 100 µm or less. Moreover, the width of the spacer 50 (line-shaped protrusion) is 200 µm or more and 2000 µm or less. The spacer 50 may be constituted of the same material as that of the protective layer 40 and may be integrated with the protective layer 40. The plurality of line-shaped protrusions may be provided in parallel at predetermined intervals. When no lithium metal is deposited on the surface of the negative electrode current collector 32 as illustrated in FIG. 3, a space 51 is formed between the negative electrode 12 and the separator 13. The lithium metal deposited on the surface of the negative electrode current collector 32 during charge will be accommodated in the space 51 between the negative electrode 12 and the separator 13 while receiving a pressing force from the separator 13.

The lithium metal is accommodated in the space 51 between the negative electrode 12 and the separator 13. Therefore, the change in the apparent volume of the electrode group due to the deposition of the lithium metal associated with charge-discharge cycles is reduced. Thus, the stress applied to the negative electrode current collector 32 is also suppressed. Furthermore, the lithium metal accommodated between the negative electrode 12 and the separator 13 is subjected to the pressure from the separator 13. Therefore, the deposition form of the lithium metal is controlled, the lithium metal is hardly isolated, and the decrease in charge-discharge efficiency is suppressed.

In the illustrated example, the cross-sectional shape of the spacer 50 is rectangular. However, embodiments of the present disclosure are not limited thereto, and may be of a shape of, for example, a trapezoid, a rectangle having a curved line in at least one corner, an ellipse, or a portion of an ellipse. In the illustrated example, the spacer 50 is provided between the negative electrode 12 and the separator 13. However, embodiments of the present disclosure are not limited thereto, and the spacer may be provided between the positive electrode and the separator, or between the positive electrode and the separator and between the negative electrode and the separator respectively.

Although the illustrated example is a cylindrical lithium secondary battery including a wound electrode group, the shape and the like of the lithium secondary battery is not limited thereto, and may be selected according to its use and the like from various shapes such as cylindrical, coin, square, sheet, and flat shapes. The electrode group also may be in any form, and may be in the form of a stack. The components of the lithium secondary battery other than the electrode group and the non-aqueous electrolyte may have any known configuration.

### [Examples]

The lithium secondary battery according to the present disclosure will be described more specifically with reference to Examples and Comparative Examples. The present disclosure, however, is not limited to the following Examples.

### «Example 1»

### (Production of positive electrode)

A layered rock-salt type lithium-containing transition metal oxide (NCA: positive electrode active material) containing Li, Ni, Co, and Al (molar ratio of Li to the total of Ni, Co, and Al was 1.0), acetylene black (AB: conductive material), and polyvinylidene fluoride (PVdF: binder) were mixed at a mass ratio ofNCA:AB:PVdF = 95:2.5:2.5, to which N-methyl-2-pyrrolidone (NMP) was added in an appropriate amount and stirred, to prepare a positive electrode mixture slurry.

The prepared positive electrode mixture slurry was applied onto both surfaces of an Al foil (positive electrode current collector), and then dried, followed by rolling of the applied film of the positive electrode mixture using a roller. Lastly, the resultant stack of the positive electrode current collector and the positive electrode mixture was cut in a predetermined electrode size, to obtain a positive electrode with a positive electrode mixture layer formed on each of both surfaces of the positive electrode current collector.

### (Production of negative electrode having protective layer on its surface)

A belt-like electrolytic copper foil (thickness 15 µm) was prepared as a negative electrode current collector, and a 25 µm Li foil was attached on the negative electrode current collector. A block polymer and NMP serving as a dispersion medium were mixed, to prepare an ink for forming a protective layer. The ink for forming a protective layer was applied onto each of both surfaces of the negative electrode, and dried, to form a protective layer (thickness 2 µm).

The block polymer used here was prepared by synthesizing an ABA-type triblock copolymer in which each of both ends of polymethyl methacrylate (PMMA) (number average molecular weight: 19,000) serving as the second polymer segment was terminated with polystyrene (PS) (number average molecular weight: 9,000) serving as the first polymer segment.

### (Preparation of non-aqueous electrolyte)

Ethylene carbonate (EC) and dimethyl carbonate (DMC) were mixed in a volume ratio of EC:DMC = 30:70, and to the resultant mixed solvent, LiPF₆ and LiBF₂(C₂O₄) were added at concentrations of 1 mol/L and 0.1 mol/L, respectively, to prepare a liquid non-aqueous electrolyte.

### (Fabrication of battery)

A positive electrode lead made of aluminum was attached at its end by welding to the positive electrode current collector. To the negative electrode obtained above, a negative electrode lead made of nickel was attached at its end by welding. In an inert gas atmosphere, the positive electrode and the negative electrode were spirally wound with a polyethylene separator (microporous film) interposed therebetween, to prepare an electrode group.

The electrode group was housed in a bag-shaped outer body formed of a laminated sheet having an Al layer, into which the non-aqueous electrolyte was injected, and then, the outer body was sealed, to complete a lithium secondary battery Al. When housing the electrode group in the outer body, the other end of the positive electrode lead and the other end of the negative electrode lead were exposed outside the outer body.

### [Evaluation]

The battery A1 was subjected to a charge-discharge cycle test. In the charge-discharge cycle test, in a 25 °C constant temperature bath, a cycle consisting of charging under the following conditions, resting for 20 minutes, and discharging under the following conditions was repeated 150 times in total.

### (Charging)

A constant-current charging was performed at a current of 10 mA per unit area (square centimeters) of the electrode until the battery voltage reached 4.3 V, and then a constant-voltage charging was performed at a voltage of 4.3 V until the current value per unit area of the electrode reached 1 mA.

### (Discharging)

A constant-current discharging was performed at a current of 10 mA per unit area (square centimeters) of the electrode until the battery voltage reached 3 V

A ratio (C₂/C₁ × 100) of the discharge capacity C₂ at the 150th cycle to the discharge capacity C₁ at the 1st cycle was obtained as a capacity retention rate (%) at the 150th cycle.

### «Example 2»

As the block polymer, an ABA-type triblock copolymer in which each of both ends of polyethylene oxide (PEO) (number average molecular weight: 20,000) serving as the second polymer segment was terminated with polystyrene (PS) (number average molecular weight: 9,000) serving as the first polymer segment was synthesized and used. Except for the above, in the same manner as in Example 1, a lithium secondary battery A2 was fabricated and evaluated.

### <<Comparative example 1>>

A lithium secondary battery B 1 was fabricated and evaluated in the same manner as in Example 1, except that no protective layer was formed on the surface of the negative electrode current collector.

### <<Comparative example 2>>

An ink for forming a protected layer was prepared by mixing polymethyl methacrylate (PMMA) (number average molecular weight: 19,000) and NMP serving as a dispersion medium. The ink for forming a protective layer was applied onto a surface of the negative electrode current collector, followed drying, to form a protective layer (thickness 2 µm) constituted of a PMMA layer. Except for the above, in the same manner as in Example 1, a lithium secondary battery B2 was fabricated and evaluated.

### <<Comparative Example 3>>

An ink for forming a protected layer was prepared by mixing polystyrene (PS) (number average molecular weight 9,000) and NMP serving as a dispersion medium. The ink for forming a protective layer was applied onto a surface of the negative electrode current collector, followed by drying, to form a protective layer (thickness 2 µm) constituted of a PS layer. Except for the above, in the same manner as in Example 1, a lithium secondary battery B3 was fabricated and evaluated.

### <<Comparative Example 4>>

An ink for forming a protected layer was prepared by mixing 51 parts by weight of polymethyl methacrylate (PMMA) (number average molecular weight 19,000), 49 parts by weight of polystyrene (PS) (number average molecular weight 9,000), and NMP serving as a dispersion medium. The ink for forming a protective layer was applied onto a surface of the negative electrode current collector, followed by drying, to form a protective layer (thickness 2 µm) constituted of a mixed layer of PMMA and PS. Except for the above, in the same manner as in Example 1, a lithium secondary battery B4 was fabricated and evaluated.

The evaluation results of the batteries A1, A2, and B1 to B4 are shown in Table 1.

In the battery B1, in which no protective layer was formed, the capacity retention rate was low. In the batteries B2 and B3, in which either the first polymer or the second polymer alone was contained in the protective layer, no improvement was observed in the capacity retention rate. In the battery B4, in which a mixture of the first polymer and the second polymer was contained in the protective layer, no improvement was observed in the capacity retention rate.

In contrast, in the batteries A1 and A2, in which a block polymer of the first and second polymer segments bound together was contained in the protective layer, the capacity retention rates were significantly improved as compared to in the batteries B1 to B4.

**[Table 1]**

| Battery | Protective layer | Capacity retention rate (%) |
|---|---|---|
| A1 | PS-PMMA-PS block polymer | 90.5 |
| A2 | PS-PEO-PS block polymer | 87.0 |
| B1 | - | 80.8 |
| B2 | PMMA | 80.2 |
| B3 | PS | 76.1 |
| B4 | Mixture of PS and PMMA | 79.8 |

### [Industrial Applicability]

The lithium secondary battery of the present disclosure is applicable to electronic devices, such as cellular phones, smart phones, and tablet terminals, electric cars including hybrids and plug-in hybrids, home storage battery systems combined with a solar cell, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: lithium secondary battery
11 positive electrode
12 negative electrode
13 separator
14 electrode group
15 case main body
16 sealing body
17, 18 insulating plate
19 positive electrode lead
20 negative electrode lead
21 step portion
22 filter
23 lower valve body
24 insulating member
25 upper valve body
26 cap
27 gasket
32 negative electrode current collector
40 protective layer
50 spacer
51 space

## Claims

1. A lithium secondary battery, comprising:
a positive electrode that absorbs lithium ions during discharge and releases the lithium ions during charge;
a negative electrode at which a lithium metal deposits during charge and from which the lithium metal dissolves during discharge; and
a non-aqueous electrolyte having lithium ion conductivity, wherein
a surface of the negative electrode is covered with a protective layer, and
the protective layer includes a block polymer in which a first polymer segment having a repeating structure of a monomer unit A and a second polymer segment having a repeating structure of a monomer unit B are bound together.

2. The lithium secondary battery according to claim 1, wherein the block polymer is an ABA-type triblock copolymer in which the first polymer segment is bound to each of both ends of the second polymer segment.

3. The lithium secondary battery according to claim 1 or 2, wherein a tensile strength of the first polymer segment is greater than a tensile strength of the second polymer segment.

4. The lithium secondary battery according to any one of claims 1 to 3, wherein a degree of swelling with the non-aqueous electrolyte of the second polymer segment is higher than the degree of swelling with the non-aqueous electrolyte of the first polymer segment.

5. The lithium secondary battery according to any one of claims 1 to 4, wherein the monomer unit A is a styrene unit.

6. The lithium secondary battery according to any one of claims 1 to 5, wherein the monomer unit B is a methyl methacrylate unit.

7. The lithium secondary battery according to any one of claims 1 to 6, wherein a molecular weight of the first polymer segment is smaller than a molecular weight of the second polymer segment.

8. The lithium secondary battery according to any one of claims 1 to 7, wherein the first polymer segment has a molecular weight of 1,000 or more and 100,000 or less.

9. The lithium secondary battery according to any one of claims 1 to 8, wherein the second polymer segment has a molecular weight of 10,000 or more and 1,000,000 or less.

10. The lithium secondary battery according to any one of claims 1 to 9, wherein the protective layer has a thickness of 0.1 µm or more and 5 µm or less.
